# EUROPEAN PATENT APPLICATION

(11) **EP 2 109 052 A1**
(43) Date of publication of application: **14.10.2009**
(21) Application number: 09250850.6
(22) Date of filing: 25.03.2009
(51) Int. Cl.: G06F 17/30

(54) **System and method for query term suggestion for unprecise queries**

(30) Priority: 25.03.2008 US 55102
(71) Applicant: Verint Systems Ltd., 46733 Herzilya Pituach (IL)
(72) Inventor: Omer, Ziv, Rehovot 76470 (IL); Brand, Michael, Parkdale Victoria 3195 (AU); Stauber, Yitzhak, Ra'anna 43263 (IL); Shapira, Ido, Tel Aviv 69360 (IL); Baum, Daniel Mark, Modiin 71700 (IL); Gvili, Yaron, Kfar Saba 44418 (IL)
(74) Representative: Bibby, William Mark

(57) **Abstract**

A computer system coupled to a database is configured to receive a database query, and evaluate a set of records from a database based on the database query. The database comprises a plurality of records, and each record comprises text translated from audio. The system then determines a plurality of measurement terms based on the database query, and processes at least a portion of the text of at least one record of the database to determine a quality of the database query based on the occurrences of the measurement terms within the portion of text, and performs an action based on the quality of the database query.

## Description

### TECHNICAL FIELD

This invention is related to the field of database queries, and more specifically to the quality assessment of database queries, where the database comprises a plurality of records, and the records comprise text translated from audio.

### TECHNICAL BACKGROUND

Operations such as call centers may generate large databases of records containing text translated from audio data. For example, a call center may record each call initiated or received by the call center for later analysis. Typically, these recordings are translated from audio data to text data for storage and retrieval as records in a database. Database queries are used to access sets of records from the database, based on one or more query terms within the database queries. However, when the query returns a set of records, users have no way of knowing if the set selected by the query contains all of the records that the user desires. A user would have to spend large amounts of time composing a variety of queries and comparing the results of the queries in order to find an optimum query for selecting the desired records.

### OVERVIEW

A computer system coupled to a database is configured to receive a database query, and evaluate a set of records from a database based on the database query. The database comprises a plurality of records, and each record comprises text translated from audio. The system then determines a plurality of measurement terms based on the database query, and processes at least a portion of the text of at least one record of the database to determine a quality of the database query based on the occurrences of the measurement terms within the portion of text, and performs an action based on the quality of the database query.

In some embodiments the measurement terms comprise terms from the database query. The measurement terms also may comprise synonyms, homophones, and alternate inflections of terms from the database query.

The computer system also may be configured to process at least a portion of the text of at least one record of the database by processing at least a portion of the text of at least one record of the database to determine the quality of the database query based on the location and frequency of the measurement terms alone and with respect to each other occurring within the text.

In some example embodiments at least one record includes a confidence score corresponding to the confidence of the translation of the portion of the text from audio to text.

The computer system also may be configured to process at least a portion of the text of at least one record of the database by processing at least a portion of the text of at least one record of the database to determine the quality of the database query based on the confidence score of the at least a portion of text.

The computer system may further be configured to process the set of records with the database query to determine a stability of the database query, and modify the quality of the database query based on the stability of the database query.

In some examples at least one record also contains metadata and the computer system is configured to process at least a portion of the metadata of at least one record of the database to determine a quality of the database query.

In still further embodiments the action includes modifying the database query, while in other embodiments the action includes suggesting modification of the database query to a user.

In still further embodiments, the computer is configured to evaluate a set of records from the database by determining a score for each record based on the occurrences of the measurement terms within each record.

In another embodiment, a computer system coupled to a database is configured to receive a database query, and evaluate a set of records from a database based on the database query. The database comprises a plurality of records, and each record comprises text translated from audio. The system also receives a tag from a user corresponding to at least one record within the database. The system then processes at least one of the records in the database to determine a quality of the database query based on the records corresponding to the tag, and performs an action based on the quality of the database query.

In yet another embodiment, a computer system coupled to a database is configured to receive a first database query, and evaluate a first set of records from a database based on the first database query. The database comprises a plurality of records, and each record comprises text translated from audio. The system also receives a second database query, and determines a plurality of second measurement terms based on the second database query. The computer system continues by processing at least a portion of the text of at least one record of the first set of records to determine a coupling of the first database query and the second database query based on the occurrences of the second measurement terms within the portion of the text of at least one record of the first set of records. Finally, the computer system performs an action based on the coupling of the first database query and the second database query.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, there is no intent to limit the disclosure to the embodiment or embodiments disclosed herein. On the contrary, the intent is to cover all alternatives, modifications, and equivalents.

Figure 1 is a block diagram illustrating a system for the quality analysis of database queries;

Figure 2 is block diagram illustrating a computer system configured for the quality analysis of database queries;

Figure 3 is a flow diagram illustrating a method for the quality analysis of database queries;

Figure 4 is a flow diagram illustrating a method for the quality analysis of database queries;

Figure 5 is a flow diagram illustrating a method for the quality analysis of database queries;

Figure 6 is an illustration of a user interface in a system for the quality analysis of database queries; and

Figure 7 is a flow diagram illustrating a method for the quality analysis of database queries.

### DETAILED DESCRIPTION

As discussed above, when users compose database queries, there currently is no mechanism for evaluating the quality of the query. Queries may suffer from two different errors. Some queries may retrieve spurious records that the user does not desire to select, while other queries may fail to retrieve records that the user desires. Some queries may suffer from both of these errors. By determining the quality of a database query, users are able to make more intelligent decisions about any modifications of the query.

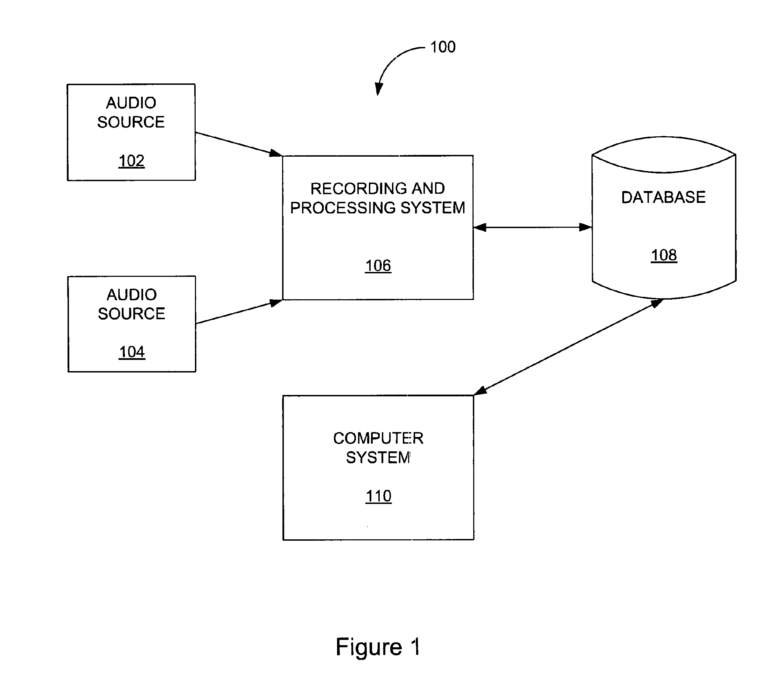

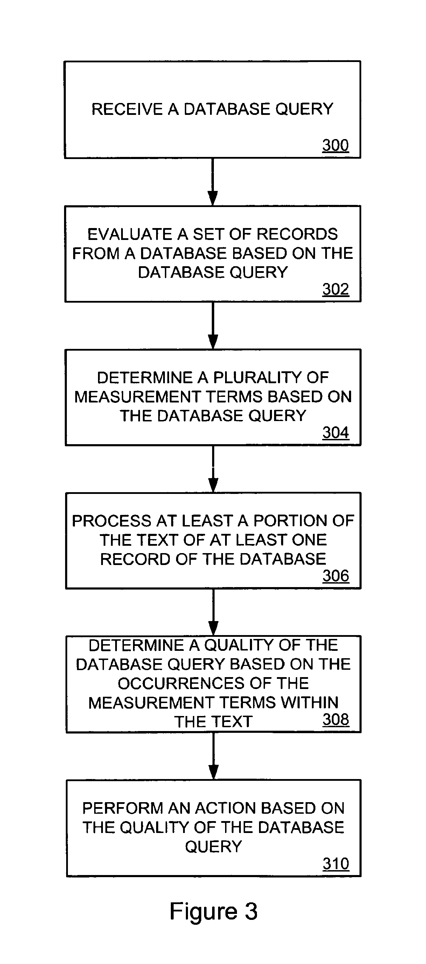

Figure 1 is a block diagram illustrating a system for the quality analysis of database queries. This example audio system **100** includes audio source **102,** audio source **104,** recording and processing system **106,** database **108,** and computer system **110.** Audio sources **102** and **104** are configured to send audio data to recording and processing system **106.** This audio data may take any of a very wide variety of formats, including both analog and digital audio formats. Recording and processing system **106** receives audio data from audio sources **102** and **104,** translates the audio data to text data, and stores the text data (in the format of records) in database **108.** Recording and processing system **106** may optionally assign a confidence factor to each word translated from audio to text and store the confidence factors with the text data on database **108.** Confidence factors are estimates of the accuracy of the translation of a word or phrase from audio data to text data. Computer system **110** is coupled with database **108** and is configured to perform searches and analysis of the text contained in records in database **108.** This functionality is illustrated in Figures 3-7 and described in further detail below.

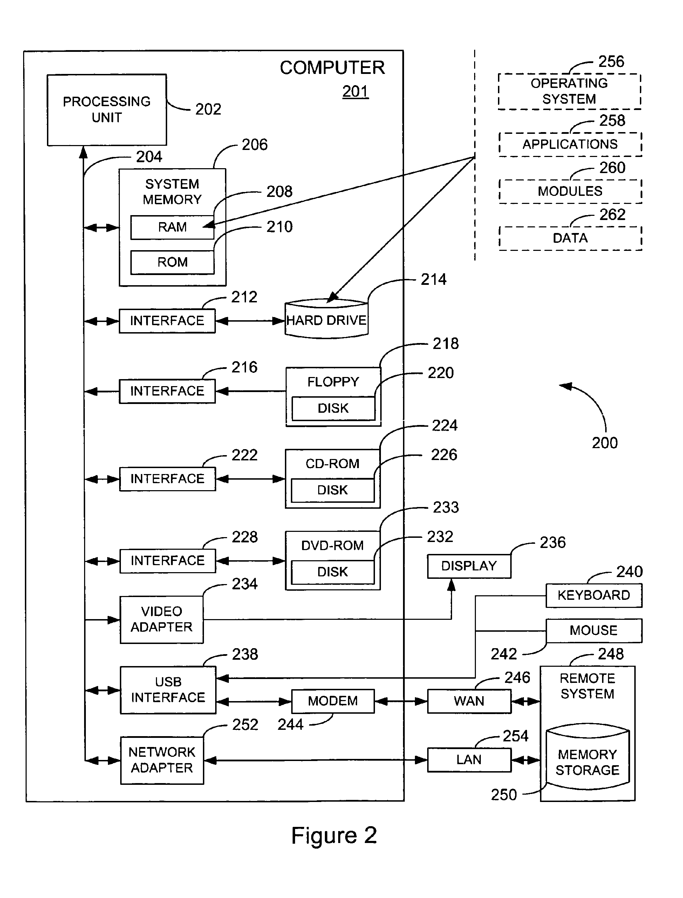

The methods, systems, devices, databases, and servers described herein may be implemented with, contain, or be executed by one or more computer systems.
The methods described herein may also be stored on a computer readable medium. Many of the elements of audio system **100** may be, comprise, or include computer systems.
This includes, but is not limited to audio source **102,** audio source **104,** recording and processing system **106,** database **108,** and computer system **110.** These computer systems are illustrated, by way of example, in Figure 2.

Figure 2 is a block diagram illustrating a computer system **200** including a computer **201** configured as computer system **110,** such as that illustrated in Figure 1. Computer system **200** includes computer **201** which in turn includes processing unit **202,** system memory **206,** and system bus **204** that couples various system components including system memory **206** to processing unit **202.** Processing unit **202** may be any of a wide variety of processors or logic circuits, including the Intel X86 series, Pentium, Itanium, and other devices from a wide variety of vendors. Processing unit **202** may include a single processor, a dual-core processor, a quad-core processor or any other configuration of processors, all within the scope of the present invention. Computer **201** could be comprised of a programmed general-purpose computer, although those skilled in the art will appreciate that programmable or special purpose circuitry and equipment may be used. Computer system **200** may be distributed among multiple devices that together comprise elements **202-262.**

There are a wide variety of system bus **204** architectures, such as PCI, VESA, Microchannel, ISA, and EISA, available for use within computer **201,** and in some embodiments multiple system buses may be used within computer **201.** System memory **206** includes random access memory (RAM) **208,** and read only memory (ROM) **210.** System ROM **210** may include a basic input/output system (BIOS), which contains low-level routines used in transferring data between different elements within the computer, particularly during start-up of the computer. System memory **206** can include any one or combination of volatile memory elements (*e.g.*, random access memory (RAM, such as DRAM, SRAM, SDRAM, *etc*.)) and nonvolatile memory elements (*e.g.*, ROM, hard drive, tape, CDROM, *etc*.). Moreover, system memory **206** may incorporate electronic, magnetic, optical, and/or other types of storage media. Note that system memory **206** can have a distributed architecture, where various components are situated remote from one another, but can be accessed by processing unit **202.**

Processing unit **202** receives software instructions from system memory **206** or other storage elements and executes these instructions directing processing unit **202** to operate in a method as described herein. These software instructions may include operating system **256,** applications **258,** modules **260,** utilities, drivers, networking software, and data **262.** Software may comprise firmware, or some other form of machine-readable processing instructions.

Computer **201** also includes hard drive **214** coupled to system bus **204** through hard drive interface **212,** floppy drive **218** containing floppy disk **220** coupled to system bus **204** through floppy drive interface **216,** CD-ROM drive **224** containing CD-ROM disk **226** coupled to system bus **204** through CD-ROM drive interface **222,** and DVD-ROM drive **233** containing DVD-ROM disk **232** coupled to system bus **204** through DVD-ROM drive interface **228.** There are a wide variety of other storage elements, such as flash memory cards and tape drives, available for inclusion in computer **201,** which may be coupled to system bus **204** through a wide variety of interfaces. Also, these storage elements may be distributed among multiple devices, as shown here, and also may situated remote from each other, but can be accessed by processing unit **202.**

Computer **201** also includes video adaptor **234** configured to drive display **236,** and universal serial bus (USB) interface **238** configured to receive user inputs from keyboard **240** and mouse **242.** Other user interfaces could comprise a voice recognition interface, microphone and speakers, graphical display, touch screen, game pad, scanner, printer, or some other type of user device. These user interfaces may be distributed among multiple user devices. USB interface **238** is also configured to interface with modem **244** allowing communication with remote system **248** through a wide area network (WAN) **246,** such as the internet. USB interface **238** and network adaptor **252** may be configured to operate as input ports capable of receiving records from database **108,** and audio data from audio sources **102** and **104.**

Computer **201** further includes network adaptor **252** configured to communicate to remote system **248** through a local area network (LAN) **245.** There are a wide variety of network adaptors **252** and network configurations available to allow communication with remote systems **248,** and any may be used in other embodiments. For example, networks may include Ethernet connections or wireless connections. Networks may be local to a single office or site, or may be as broad and inclusive as the Internet or Usenet. Remote systems **248** may include memory storage **250** in a very wide variety of configurations.

Figure 3 is a flow diagram illustrating a method for the quality analysis of database queries. Reference numbers from Figure 3 are indicated parenthetically below. In this example, computer system **110** receives a database query, (operation **300).** This database query may be received from a user, retrieved from memory or otherwise received by computer system **110.** Each record in the database comprises text data translated from audio data, such as from calls recorded by a call center. Records may also include metadata, such as the date, time, and location of the call, the identities of the parties to the call, along with a wide variety of other information.

Database queries may include a wide variety of formats. For example, a query may comprise a plurality of database query terms such as "credit WITHIN 5 OF card" which would find all instances of the word "credit" appearing within 5 words of "card." Terms may also include elements such as the time within the call where the word or words appear. For example, a term may be defined to search for a phrase, but limit the search to calls where the phrase only occurs in the first minute of the call. Query terms may also be weighted by their importance, or may be given negative weights as terms to avoid. In some embodiments, records containing "avoid" terms are removed from the set or records retrieved by the database query. Many complex terms may be formed and used within a database query. Also, a query may contain a list of tagged records that must be included in the results, or a list of tagged records that must not be included in the results.

Computer system **110** then evaluates a set of records from database **108** based on the database query, (operation **302**). This evaluation may take a variety of forms. For example, computer system **110** may retrieve header information for each of the records, or it may retrieve each of the set of records for review by the user in addition to quality analysis as described below.

Computer system **110** determines a plurality of measurement terms based on the database query, (operation **304**). These measurement terms may, in some examples, include terms from the database query. Other embodiments may include synonyms, homophones, and alternate inflections (such as verb conjugations) of terms from the database query. Also, they may comprise terms such as the identity of the speaker, time within the call, or other similar terms.

Computer system **110** then processes at least a portion of the text of at least one record of the database, (operation **306**). This processing may include finding all the occurrences of a term within one or more records, or determining how many different measurement terms are found within each record, or any other similar processing of the records from database **108.** This operation may optionally include processing of at least a portion of the metadata associated with the text of at least one record of the database. In some embodiments, computer system **110** determines a score for each record based on the occurrences of the measurement terms within each record. Other embodiments may determine the correlation between measurement terms by examining two or more different terms and determining if they occur in, or are absent from, the same subsets of records. In some embodiments, the text translated from audio may comprise phonetic symbols representing the audio, instead of actual text corresponding to the audio.

Computer system **110** determines a quality of the database query based on the occurrences of the measurement terms within the processed text, (operation **308**).
This quality figure may be determined in any of a wide variety of methods. For example, each term may be given a strength based on the location and frequency of occurrences of the measurement terms within the text of the set of records. These strength terms may be combined to produce a quality term for the overall database query.

Once the quality of the database query is determined, computer system **110** performs an action based on the quality of the database query, (operation **310**). This action may take a variety of forms. For example, computer system **110** may automatically modify the database query based on the quality of the database query. Alternatively, computer system **110** may make one or more recommendations to a user based on the quality of the database query. For example, computer system **110** may suggest to the user one or more modifications of the database query, such as the addition of further terms, the modification of existing terms, or the deletion of existing terms. Other actions may include providing the user with the quality of the database query, or other general suggestions, such as: "your query needs more terms," "you over-use the possibility for 'avoid' terms," "the category is complete as-is," etc.

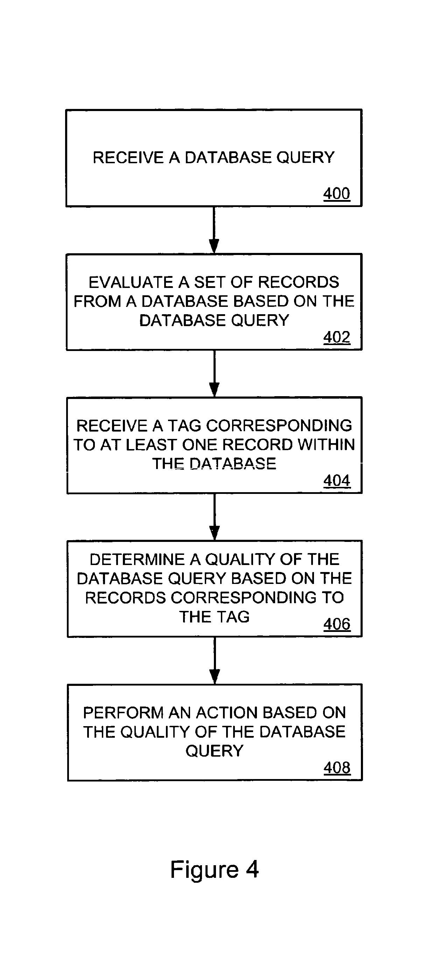

Figure 4 is a flow diagram illustrating a method for the quality analysis of database queries. Reference numbers from Figure 4 are indicated parenthetically below. In this example, computer system **110** receives a database query, (operation **400**). Computer system **110** then evaluates a set of records from database **108** based on the database query, (operation **402**). Computer system **110** also receives a tag corresponding to at least one record within database **108,** (operation **404**). This tag is used to flag relevant or non-relevant records within database **108.** Tags may be created by a user, contained within the database query, or received from any other source. Any quantity of tags may be created, and each tag may take any of a wide variety of formats. For example, tags may comprise Boolean values, numeric values, enumerated type values, or any other data format. Any number of records within database **108** may be tagged as relevant or non-relevant.

Computer system **110** then processes at least one record of the database to determine a quality of the database query based on the records corresponding to the tag, (operation **406**). This processing may include finding all the occurrences of a term within one or more records, or determining how many different measurement terms are found within each record, or any other similar processing of the records from database **108.** For example, a query that selects a set of records including all of the records tagged as relevant will have a higher quality than a query that fails to select one or more of the records tagged as relevant. Likewise, a query that does not select any of the records tagged as non-relevant will have a higher quality than a query that selects one or more of the records tagged as non-relevant.

Finally, computer system **110** performs an action based on the quality of the database query, (operation **408**). As discussed above, this action may take any of a wide variety of forms, including, but not limited to, modifying the database query, or suggesting modifications of the database query to a user.

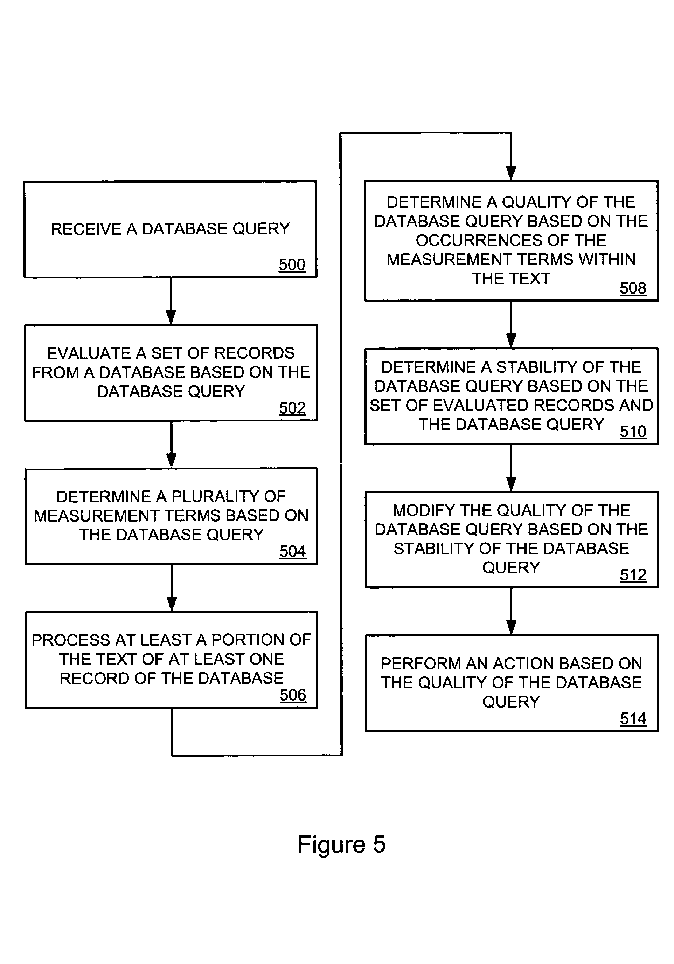

Figure 5 is a flow diagram illustrating a method for the quality analysis of database queries. Reference numbers from Figure 5 are indicated parenthetically below. In this example, computer system **110** receives a database query, (operation **500**). Computer system **110** then evaluates a set of records from database **108** based on the database query, (operation **502**). Computer system **110** determines a plurality of measurement terms based on the database query, (operation **504**).

Computer system **110** then processes at least a portion of the text of at least one record of the database, (operation **506**). This processing may include finding all the occurrences of a term within one or more records, or determining how many different measurement terms are found within each record, or any other similar processing of the records from database **108.** Computer system **110** determines a quality of the database query based on the occurrences of the measurement terms within the processed text, (operation **508**).

Computer system **110** also determines a stability of the database query based on the set of evaluated records and the database query, (operation **510).** Stability of a database query may be determined using any of a wide variety of methods. When a large number of records are selected by the database query by a single term, the query is said to be unstable. Ideally, each record selected for inclusion in the evaluated set of records will be selected for inclusion by at least two terms in the query. This provides a higher level of confidence that the query is selecting all of the relevant records for inclusion in the evaluated set of records.

Computer system **110** modifies the quality of the database query based on the stability of the database query, (operation **512).** Since stable queries are desirable, such queries are of higher quality than unstable queries, and the quality of the database query is modified accordingly.

Finally, computer system **110** performs an action based on the quality of the database query, (operation **514).** As discussed above, this action may take any of a wide variety of forms, including, but not limited to, modifying the database query, or suggesting modifications of the database query to a user. For example, if the database query is unstable, computer system **110** may add additional terms to the query, or suggest to the user that additional terms are necessary to create a stable database query.

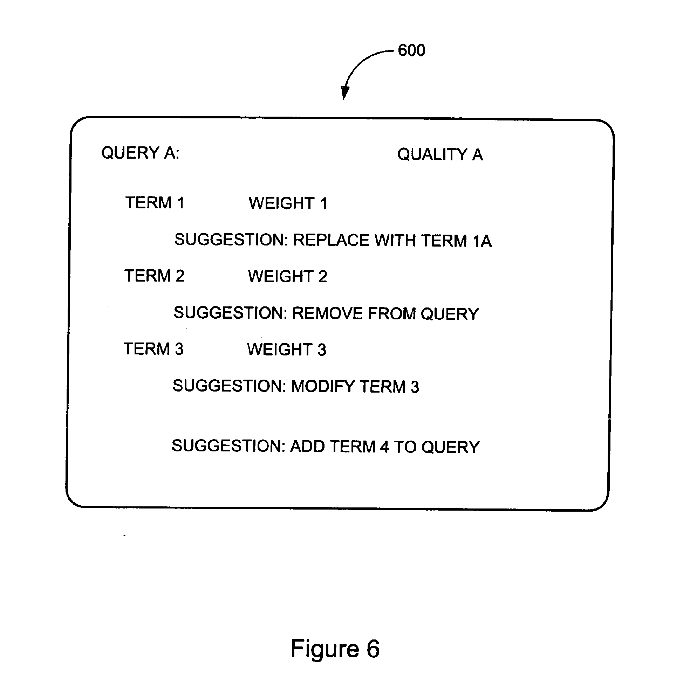

Figure 6 is an illustration of a user interface **600** in a system for the quality analysis of database queries. This example user interface **600** of the computer system **110** is representative of the type of information that may be provided to a user, but any other interface may be used in other embodiments. In this example user interface **600,** the title of the query (QUERY A) and the quality of the query (QUALITY A) are prominently displayed at the top of the screen. In this simple example, the query contains three terms (TERM 1, TERM 2, and TERM 3). Each term has a weight (WEIGHT 1, WEIGHT 2, and WEIGHT 3). Here, the system has made three suggestions to a user. First, under TERM 1, the method has suggested replacing TERM 1 with TERM 1A. The system has also suggested removing TERM 2 from the query. The system has also suggested that the user should modify TERM 3. Finally, the system has suggested adding TERM 4 to the query. Other embodiments may user other user interfaces to communicate quality of a database query to a user, and to perform other actions based on the quality of the database query.

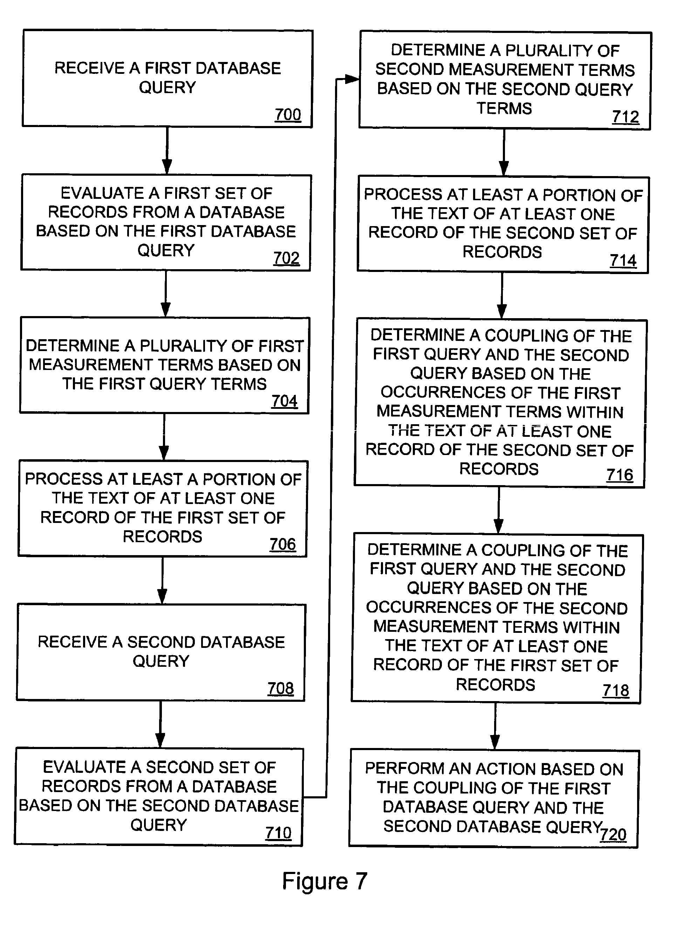

Figure 7 is a flow diagram illustrating a method for the quality analysis of database queries. Reference numbers from Figure 7 are indicated parenthetically below. Quality assessment of database queries may also be useful in a root cause analysis (RCA) of database records. In a RCA two or more different queries are created to correspond to different sets of records within database **108.** Ideally, each query corresponds to a unique subset of records within database **108.** Thus, it is useful to determine a quality for each of the queries, and also to determine the interactions of the sets of records evaluated by each database query. For example, two different queries that evaluate identical sets of records are redundant. Also queries that evaluate very similar sets of records are most likely of little value in a root cause analysis. By determining the quality of each database query and additionally determining the coupling between the database queries, the root cause analysis may be configured to automatically determine which queries are meaningful to the user. This functionality may also be of use in other situations, such as in a system configured to automatically detect when a newly created query is converging towards a previously defined query. In this case, the system may alert the user to the presence of the previously defined query, saving the user unnecessary effort.

In this example, computer system **110** receives a first database query, (operation **700).** Computer system **110** then evaluates a first set of records from database **108** based on the first database query, (operation **702).** Optionally, computer system **110** determines a plurality of first measurement terms based on the first database query, (operation **704).** Computer system **110** then processes at least a portion of the text of at least one record of the first set of records, (operation **706).**

Computer system **110** also receives a second database query, (operation **708).** Optionally, computer system **110** then evaluates a second set of records from database **108** based on the second database query, (operation **710).** Computer system **110** determines a plurality of second measurement terms based on the second database query, (operation **712).** Optionally, computer system **110** then processes at least a portion of the text of at least one record of the second set of records, (operation **714).**

Computer system **110** determines a coupling of the first query and the second query based on the occurrences of the first measurement terms within the text of at least one record of the second set of records, (operation **716).** Computer system **110** optionally determines the coupling of the first query and the second query based on the occurrences of the second measurement terms within the text of at least one record of the first set of records, (operation **718).**

Finally, computer system **110** performs an action based on the coupling of the first database query and the second database query, (operation **720**). This action may take any of a variety of forms. For example, within a root cause analysis, the method may delete queries that are highly coupled, and thus redundant. The method may make recommendations to a user about modifying the set of queries based on the coupling of the existing queries. Note that this method may be utilized for some or all of the queries used in a root cause analysis. There is no requirement to determine couplings for all of the possible pairs of queries, but some embodiments may determine the full set of possible couplings in the course of a root cause analysis.

One should note that the flowcharts included herein show the architecture, functionality, and/or operation of a possible implementation of software. In this regard, each block can be interpreted to represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

One should note that any of the programs listed herein, which can include an ordered listing of executable instructions for implementing logical functions (such as depicted in the flowcharts), can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, or device. More specific examples (a non-exhaustive list) of the computer-readable medium could include an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). In addition, the scope of the certain embodiments of this disclosure can include embodying the functionality described in logic embodied in hardware or software-configured mediums.

It should be emphasized that the above-described embodiments are merely possible examples of implementations, merely set forth for a clear understanding of the principles of this disclosure. Many variations and modifications may be made to the above-described embodiments without departing substantially from the spirit and principles of the disclosure. All such modifications and variations are intended to be included herein within the scope of this disclosure.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. A method for analyzing a database query comprising:
receiving a database query;
evaluating a set of records from a database based on the database query, the database comprising a plurality of records, each record comprising text translated from audio;
determining a plurality of measurement terms based on the database query;
processing at least a portion of the text of at least one record of the database to determine a quality of the database query based on the occurrences of the measurement terms within the portion of text; and
performing an action based on the quality of the database query.

2. The method for analyzing a database query of claim 1, wherein the measurement terms comprise terms from the database query.

3. The method for analyzing a database query of claim 1, wherein the measurement terms comprise synonyms, homophones, and alternate inflections of terms from the database query.

4. The method analyzing a database query of claim 1, wherein processing at least a portion of the text of at least one record of the database further comprises:
processing at least a portion of the text of at least one record of the database to determine the quality of the database query based on the location and frequency of the measurement terms alone and with respect to each other occurring within the text.

5. The method for analyzing a database query of claim 1, wherein at least one record includes a confidence score corresponding to the confidence of the translation of the portion of the text from audio to text.

6. The method for analyzing a database query of claim 5, wherein processing at least a portion of the text of at least one record of the database further comprises:
processing at least a portion of the text of at least one record of the database to determine the quality of the database query based on the confidence score of the at least a portion of text.

7. The method for analyzing a database query of claim 1, further comprising:
processing the set of records with the database query to determine a stability of the database query; and
modifying the quality of the database query based on the stability of the database query.

8. The method for analyzing a database query of claim 1, wherein at least one record also includes metadata.

9. The method for analyzing a database query of claim 1, further comprising:
processing at least a portion of the metadata of at least one record of the database to determine a quality of the database query.

10. The method for analyzing a database query of claim 1, wherein the action includes modifying the database query.

11. The method for analyzing a database query of claim 1, wherein the action includes suggesting modification of the database query to a user.

12. The method for analyzing a database query of claim 1, wherein evaluating a set of records from the database includes determining a score for each record based on the occurrences of the measurement terms within each record.

13. The method for analyzing a database query of claim 1, wherein the text comprises phonetic symbols.

14. A database analytics system comprising:
a storage system containing software; and
a processing system coupled to the storage system;
wherein the processing system is instructed by the software to:
receive a database query;
evaluate a set of records from a database based on the database query, the database comprising a plurality of records, each record comprising text translated from audio;
determine a plurality of measurement terms based on the database query;
process at least a portion of the text of at least one record of the database to determine a quality of the database query based on the occurrences of the measurement terms within the portion of text; and
perform an action based on the quality of the database query.
